# EUROPEAN PATENT SPECIFICATION

(11) **EP 3 211 467 B1**
(45) Date of publication and mention of the grant of the patent: **17.06.2020**
(21) Application number: 17157060.9
(22) Date of filing: 21.02.2017
(51) Int. Cl.: G02B 6/38

(54) **HOLDER DEVICE FOR OPTICAL ADAPTER**
HALTERVORRICHTUNG FÜR OPTISCHEN ADAPTER
DISPOSITIF DE SUPPORT POUR ADAPTATEUR OPTIQUE

(30) Priority: 26.02.2016 JP 2016035058
(43) Date of publication of application: 30.08.2017
(73) Proprietor: Sanwa Denki Kogyo Co., Ltd., Tokyo (JP)
(72) Inventor: SATO, Takashi, Tokyo (JP)
(74) Representative: TBK

(56) References cited:
- WO-A1-2011/094944
- US-A1- 2006 169 856

## Description

### TECHNICAL FIELD

The present invention relates to an optical adapter holder device formed by fitting and arranging a two-core adapter with shutter into each of receiving portions of an optical adapter holder having a plurality of receiving portions.

### BACKGROUND ART

Conventionally, as shown in patent document 1 which is a prior application of the subject application, the applicant of the subject case has proposed an interconnecting adapter for LC type optical connectors, the adapter comprising:
fitting portions of LC type optical connector plugs respectively provided in both ends of a connector housing so that optical axes are aligned; a sleeve holder installing and retaining each of leading end portions of the LC type optical connector plugs inserted from the fitting portions in both ends, the sleeve holder being arranged in an inner portion of the connector housing; a shutter plate which is diagonally arranged and closing at least one fitting portion of the connector housing; a leaf spring which energizes the shutter plate in a closing direction; the shutter plate and the leaf spring being arranged in the fitting portion; and the shutter plate being opened against a pressing force of the leaf spring by inserting the LC type optical connector plug from the fitting portion of the connector housing so as to fit into the sleeve holder, wherein the connector housing has in its inner side of a side wall a guide groove line which inserts and guides the LC type optical connector plug from its fitting portion, and a recess portion which conforms to a swing motion of the shutter plate, and wherein the guide groove line is constructed by cutting a part of the guide groove line so as to form the same planar shape by forming the recess portion.

In this case, since the shutter plate itself is diagonally arranged in the fitting portion of the optical connector, the shutter plate is opened in such a manner that a corner portion of a ferrule leading end pushes a front face of the shutter plate away in the case that the ferrule leading end of the LC type optical connector plug is securely inserted along the horizontal direction from the near side of the fitting portion toward the inner direction. As a result, there is no fear that the core portion of the ferrule leading end is damaged by the shutter plate.

Further adapter holders are known from Patent Documents 2 and 3.

### CITATION LIST

### PATENT DOCUMENT

Patent Document 1: Japanese Unexamined Patent Publication No. 2014-139633
Patent Document 2: WO 2011/094944 A1
Patent Document 3: US 2006/0169856 A1

### SUMMARY OF THE INVENTION

### PROBLEM TO BE SOLVED BY THE INVENTION

In the meanwhile, the conventional adaptor for LC type optical connector is formed into the structure in which the optical axes of the LC type optical connector plugs respectively fitted into the fitting ends in both ends of the housing are aligned with each other. At this time, in the case that the two-core adapters with shutters are installed, for example, six or more to the holder so as to be usable as a multi-core adapter, and the plug itself (a cord extended out to a rear side of a boots of the plug) is pulled in a downward direction in a state in which the optical connector plug is inserted into the adapter, a stress in a downward direction acts on the holder and the holder is bent and expanded, so that there has been a risk that the adapter finally comes off from the holder.

Accordingly, an object of the present invention is to provide a holder device for an optical adapter in which multi-core holders, for example, two-core adapters with shutters are installed a plurality of numbers (for example, six or more) to a holder which can receive the multi-core adapters, and the multi-core adapter can be securely retained in the holder so as to prevent the multi-core adapter from coming off from the holder even in the case that a stress pulling a plug in a downward direction or a stress in a direction of pushing the adapter to the holder acts on the plug in a state in which an optical connector plug is inserted into the multi-core adapter.

### MEANS FOR SOLVING PROBLEM

In order to solve the object mentioned above, according to the present invention, there is provided a holder device according to claim 1.

According to the present invention, said holder device may further comprise a pushing direction come-off prevention portion constructed by a locking step portion which is formed in an inner wall surface of a bottom portion of the holder and is formed into a downward step shape in a forward direction, and a locked step portion which is formed in an outer wall surface of the bottom portion of the multi-core optical adapters for being locked to the locking step portion and is formed into an upward step shape in a rearward direction.

### EFFECT OF THE INVENTION

According to the present invention, the holder device is provided with the holder for the optical adapter having a plurality of receiving portions which are arranged within the approximately rectangular tubular casing so as to be adjacent via the reinforcing intermediate partition portion, and the holder device is formed by fitting and arranging the multi-core adapters in the respective receiving portions of the holder for the optical adapter. Therefore, it is possible to retain the multi-holder adapters so as to prevent the multi-core adapters from coming off from the holder even in the case that the stress pulling the plug in the downward direction or the stress in the direction of pushing the adapter to the holder acts on the plug in a state in which the optical connector plug is inserted into the multi-core adapter, for example, by installing the multi-core adapters with shutters a plurality of numbers (for example, installing six or more two-core adapters) to the holder which can receive the multi-core adapters.

The holder device for the optical adapter has the pulling direction come-off prevention portion constructed by the projection portions which are formed in the right and left inner wall surfaces of the holder for the optical adapter, and the concave portions which are formed in the right and left outer wall surfaces of the multi-core adapter for fitting and locking the projection portions. Therefore, it is possible to securely retain the multi-core adapter in the holder so as to prevent the multi-core adapter from coming off from the holder even in the case that the stress pulling the plug in the downward direction acts on the plug in the state in which the optical connector plug is inserted into the multi-core adapter.

The holder device has the pushing direction come-off prevention portion constructed by the locking step portion which is formed in the inner wall surface of the bottom portion of the holder for the optical adapter and is formed into the downward step shape in the forward direction, and the locked step portion which is formed in the outer wall surface of the bottom portion of the multi-core adapter for being locked to the locking step portion and is formed into the upward step shape in the rearward direction. Therefore, it is possible to securely retain the multi-core adapter in the holder so as to prevent the multi-core adapter from coming off from the holder even in the case that the stress in the pushing to the holder acts on the plug in the state in which the optical connector plug is inserted into the multi-core adapter.

### BRIEF DESCRIPTION OF DRAWINGS

Fig. 1 is an exploded perspective view showing a two-core adapter for interconnecting LC type optical connectors according to the best mode for carrying out the present invention;
Fig. 2 is a perspective view after assembly of the two-core adapter;
Figs. 3A to 3E show the two-core adapter, in which Fig. 3A is a plan view, Fig. 3B is a front elevational view, Fig. 3C is a bottom elevational view, Fig. 3D is a left side elevational view and Fig. 3E is a right side elevational view;
Fig. 4 is a perspective view showing a state in which a plurality of two-core adapters are sequentially fitted and arranged within respective receiving portions of a holder;
Fig. 5 is a perspective view showing a state in which a plurality of two-core adapters are fitted and arranged within the receiving portions of the holder;
Fig. 6A is a front elevational view showing a state in which a plurality of two-core adapters are sequentially fitted and arranged within the respective receiving portions of the holder;
Fig. 6B is a plan view of the same;
Fig. 7 is a side elevational view showing a state in which a plurality of two-core adapters are sequentially fitted and arranged within the respective receiving portions of the holder;
Fig. 8 is a perspective view of a state in which a cross section along a line X-X in Fig. 7 is seen from a diagonally upper side;
Fig. 9 is a partly cut perspective view showing a state in which a plurality of two-core adapters are fitted and arranged within the respective receiving portions of the holder;
Fig. 10 is a vertical cross sectional side elevational view showing a state in which a plurality of two-core adapters are fitted and arranged within the respective receiving portions of the holder;
Figs. 11A and 11B show a modified example of the present embodiment, in which Fig. 11A is a perspective view showing a holder for an eight-core adapter, and Fig. 11B is an enlarged perspective view showing a state in which four two-core adapters are fitted and arranged within respective receiving portions of the holder for the eight-core adapter;
Figs. 12A and 12B show the other modified example of the present embodiment, in which Fig. 12A is a perspective view showing a holder for a twelve-core adapter, and Fig. 12B is an enlarged perspective view showing a state in which six two-core adapters are fitted and arranged within respective receiving portions of the holder for the twelve-core adapter;
Fig. 13 is a central vertical cross sectional view of a state in which a shutter plate is pushed and tilted due to insertion, and is provided for explaining a halfway process of inserting an LC type optical connector plug into a two-core adapter for interconnecting LC type optical connectors which are fitted and arranged in a holder; and
Fig. 14 is a vertical cross sectional view of a state in which the LC type optical connector plugs are inserted from both directions of the two-core adapter for interconnecting the LC type optical connector.

### MODE(S) FOR CARRYING OUT THE INVENTION

A description will be in detail given below of the best mode for carrying out the present invention with reference to the accompanying drawings.

### <Structure of optical adapter>

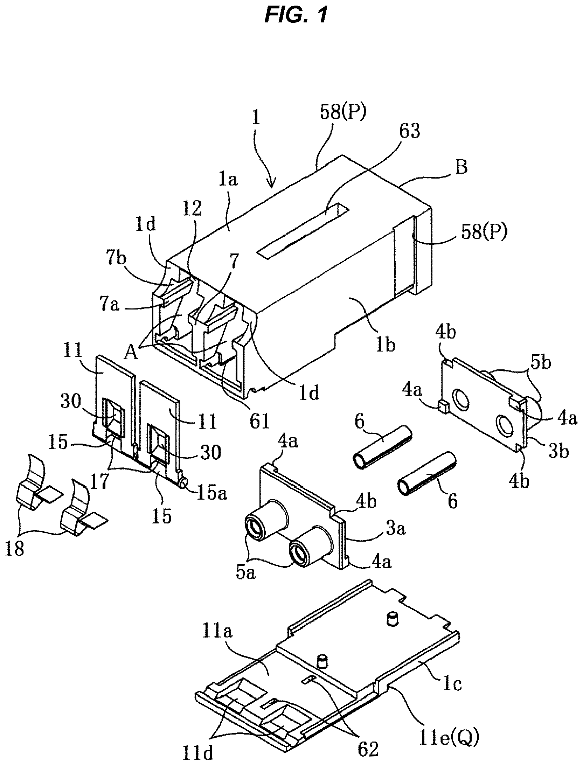

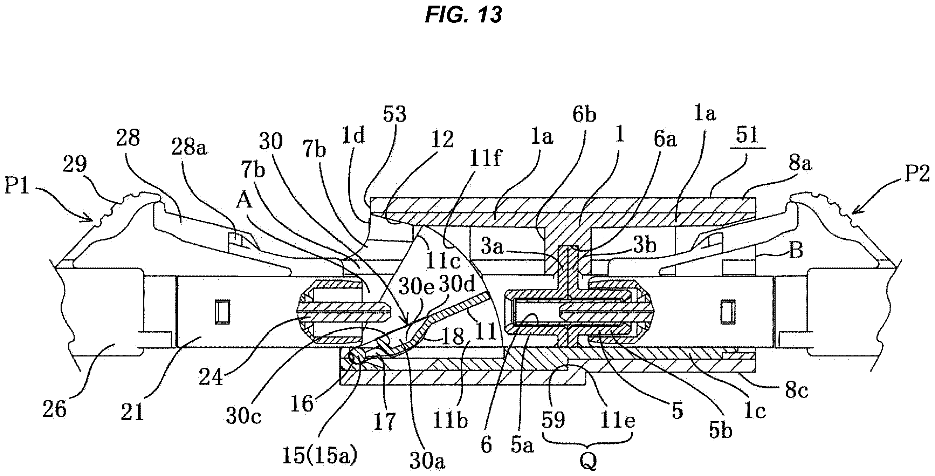

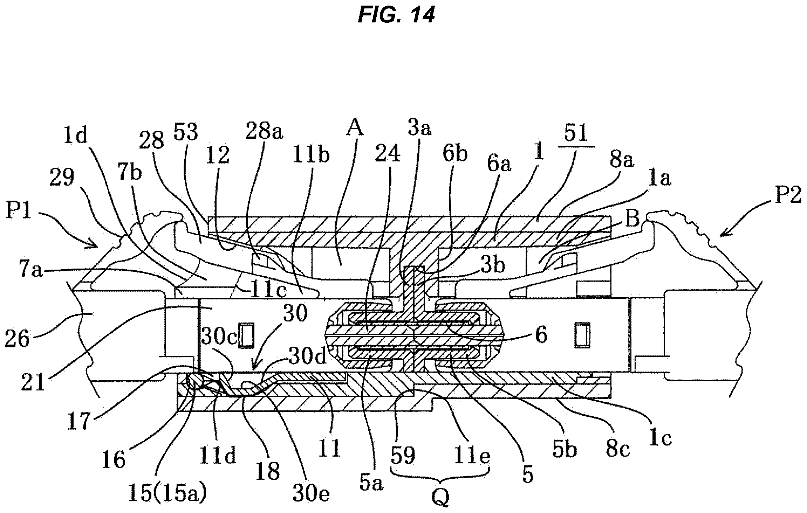

In the present embodiment, there is provided a connector housing 1 which constructs an interconnecting adapter for LC type optical connectors for two cores (hereinafter, abbreviated to a two-core adapter) for interconnecting a pair of facing LC type optical connector plugs P1 and P2 (refer to Figs. 13 and 14 mentioned later), as shown in Figs. 1 to 3.

In the connector housing 1, an upper side wall 1a and right and left side walls 1b are integrally formed into an approximately C-shaped frame in a front view, and a bottom wall 1c is attached between the right and left side walls 1b so as to face to the upper side wall 1a. As a result, the connector housing 1 is formed as a whole into a rectangular tube body provided in its both ends with fitting portions A and B which can insert a pair of facing LC type optical connector plugs P1 and P2 from both ends.

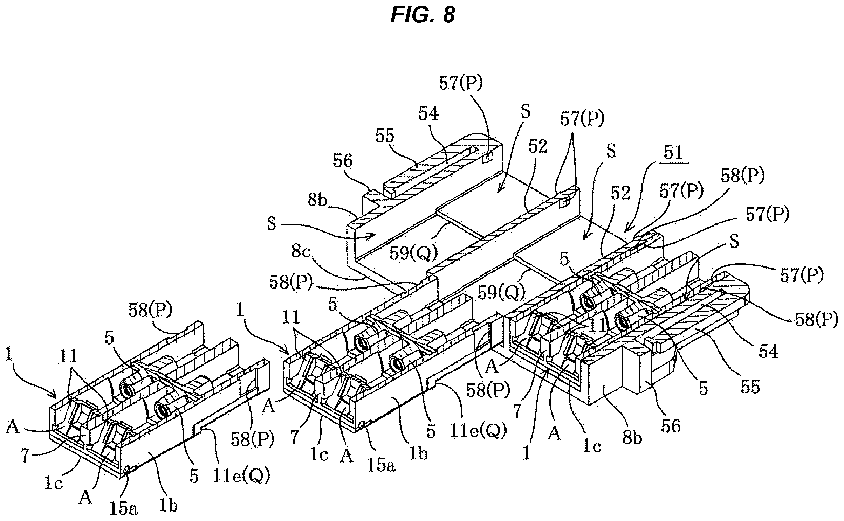

Further, concave portions 58 formed into a vertical groove are formed in rears sides of respective outer surfaces of the right and left side walls 1b in the connector housing 1 of the two-core adapter, and projection portions 57 (refer to Fig. 8 mentioned later) are formed in rear sides of right and left inner wall surfaces of a holder 51 for an optical adapter mentioned later so as to correspond to the concave portions 58. A pulling direction come-off prevention portion P is constructed by the projection portions 57 and the concave portions 58, thereby preventing the connector housing 1 of the two-core adapter from being easily got out of the holder 51 for the optical adapter by fitting the projection portion 57 to the concave portion 58.

Further, a locked step portion 11e formed into an upward step toward a rear side of the connector housing 1 is formed in an outer wall surface of the bottom portion (the bottom wall 1c) in the connector housing 1 of the two-core adapter, and a locking step portion 59 (refer to Figs. 8, 9, 10, 13 and 14 mentioned later) formed into a downward step toward a forward side is formed in an inner wall surface of the bottom portion of a holder 51 for the optical adapter mentioned later so as to correspond to the locked step portion 11e. A pushing direction come-off prevention portion Q is constructed by the locked step portion 11e and the locking step portion 59, thereby preventing the connector housing 1 of the two-core adapter from being easily pushed out of the holder 51 for the optical adapter, on the basis of the engagement of the locking step portion 59 with the locked step portion 11e.

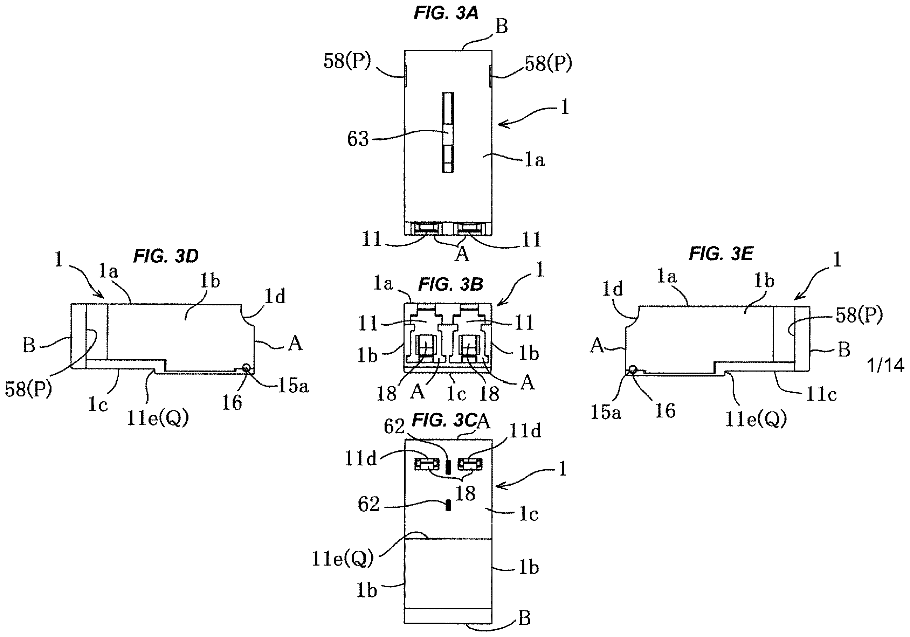

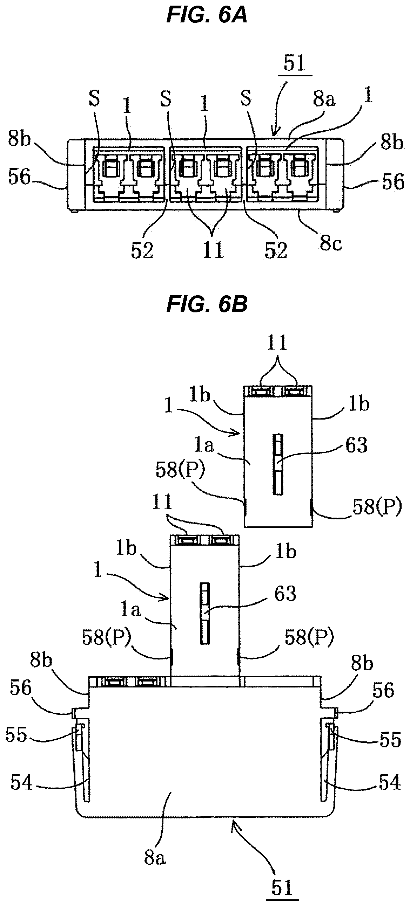

Reference numeral 63 shown in Figs. 1, 2, 3A, 4 and 6 denotes a depression for thinning the connector housing 1, and reference numeral 62 shown in Figs. 1 and 3C denotes a positioning hole for fitting a positioning projection 61 formed in a lower end of an intermediate partition portion 7 mentioned later.

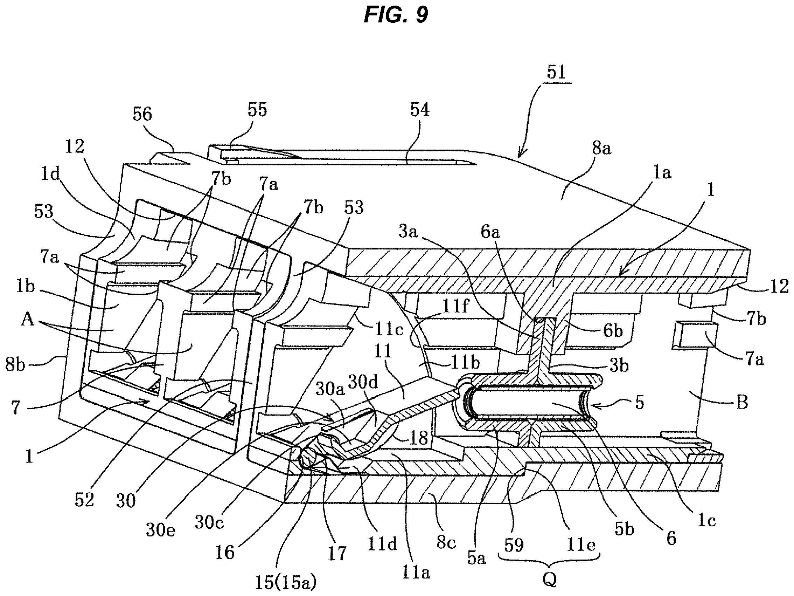

As shown in Figs. 9 and 10, and Figs. 13 and 14, a partition projection 6b in which a fitting concave portion 6a is formed at the center of a lower end is suspended at the center of an inner wall of the upper side wall 1a in the inner portion of the connector housing 1, and respective upper end portions of a pair of joint end wall members 3a and 3b constructing a sleeve holder 5 are fitted into the fitting concave portion 6a in a conforming to each other. One cylinder 5a is provided in one joint end wall member 3a arranged in a center portion of the connector housing 1 so as to protrude toward one fitting portion A, and the other cylinder 5b is provided in the other joint end wall member 3b so as to protrude toward the other fitting portion B.

More specifically, the sleeve holder 5 is formed in such a manner that both the cylinders 5a and 5b are arranged to protrude in opposite directions in a state in which rear end surfaces of both the cylinders 5a and 5b are brought into contact with each other via the joint end wall members 3a and 3b. Further, one split sleeve 6 is arranged within both the adjacent cylinders 5a and 5b corresponding to a constituting member of the sleeve holder 5 in an inward inserted state.

Further, as shown in Figs. 1, 2, 9, 10, 13 and 14, an inward C-shaped concave groove portion 7b is formed in a horizontal direction in upper sides of the right and left side walls 1b in the inner portion of the connector housing 1, the concave groove portion 7b being provided in its lower side with a guide protrusion 7a for inserting and guiding the LC type optical connector plugs P1 and P2 along a longitudinal direction. The guide protrusion 7a and the concave groove portion 7b correspond to a concavo-convex outer shape of the LC type optical connector plugs P1 and P2. Further, a key groove 12 which is a linear groove line along a direction of an optical axis is formed at the center within the upper side wall 1a in one fitting portion A for guiding the insertion of the LC type optical connector plugs P1 and P2.

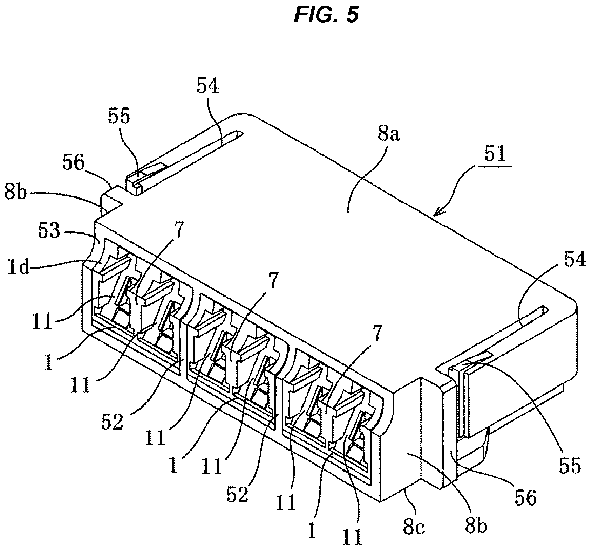

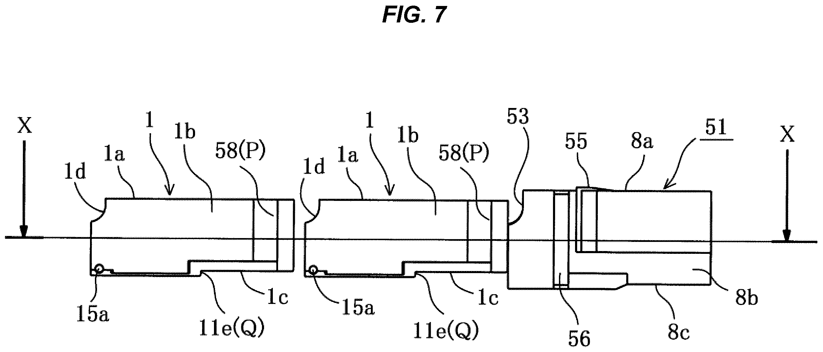

As shown in Figs. 1, 2, 3D, 3E, 5, 7 and 9 to 14, an arcuate notch portion 1d is formed in an upper end of one fitting portion A of the housing 1 which is employed in the already mentioned embodiment. Further, in place of the insertion of the LC type optical connector plug P2, the other optical part, for example, an SC type optical connector plug or the other plug may be inserted into the other fitting portion B.

Shutter plates 11 for closing the fitting portions A in a diagonal arrangement are arranged in one fitting portions A of the connector housing 1 so as to be openable and closable in an inner side. More specifically, the shutter plates 11 are structured, as shown in Figs. 1, 2, 3D, 3E, 7, 8 to 10, 13 and 4, such that a support shaft 15 is integrally provided in a protruding manner at a horizontal position in a lower end thereof, and protruding portions 15a provided at symmetrical positions in both ends of the support shaft 15 are rotatably supported to a shaft hole 16 which is formed over the bottom wall 1c at right and left facing positions in the lower portion of the fitting ends of the fitting portions A and the right and left side walls 1b.

Further, a rectangular opening portion 17 is formed approximately at the center where the lower end of the shutter plate 11 and the support shaft 15 are connected, and the shutter plate 11 is energized in a closing direction by outward fitting a leaf spring 18 which is formed by being bent approximately in an L-shaped form and is made of a metal, via the opening portion 17, bringing one end of the leaf spring 18 into pressure contact with a rectangular concave portion 11 a (having a magnitude and a thickness corresponding to a whole surface of the shutter plate 11) which is formed in an inner surface of the bottom wall 1c, and bringing the other end of the leaf spring 18 into pressure contact with an inner side surface of the shutter plate 11.

Further, as shown in Figs. 9, 10, 13 and 14, a fan-shaped recess portion 11b having a pivot of fan in the shaft hole 16 is formed in each of the right and left side walls 1b so that the shutter plate 11 can be opened and closed and swung. At this time, the recess portion 11b is formed by partly cutting the guide protrusion 7a and the concave groove portion 7b. Further, a step-like abutting surface 11c is formed over the guide protrusion 7a and the concave groove portion 7b in an upper end edge of the recess portion 11b (a closing movement end of the shutter plate 11), in an inner wall surface of each of the right and left side walls 1b of the fitting portions A of the connector housing 1, thereby locking a side surface of a movable portion in the shutter plate 11 when the shutter plate 11 swings in the closing direction. On the other hand, an arcuate guide portion 11f is formed along a leading end side of the shutter plate 11 at the rotating time in an outer end of the abutting surface 11c and the concave portion 11 a of the shutter plate 11 in the recess portion 11b.

Accordingly, a depression-shaped runout portion 30 is formed so as to prevent a leading end portion of a ferrule 24 (refer to Figs. 13 and 14) mentioned later from coming into contact with a front surface of the shutter plate 11 when the LC type optical connector plug P1 is inserted from a diagonally upward side in a near side of the fitting portion A of the connector housing 1. More specifically, the runout portion 30 is formed in an upper side of the opening portion 17 of the shutter plate 11 in a state in which the runout portion 30 is depressed approximately in a trapezoidal shape from a front surface side toward an inner side, for receiving a leading end side of the ferrule 24 in a non-contact state.

Specifically, the runout portion 30 is formed into a depression approximately having a trapezoidal shape as a whole by both right and left wall surfaces 30a and 30a which get depressed vertically in right and left sides from the front surface of the shutter plate 11, a downward side inclined surface 30c which gets depressed like a sharp slope from the front surface of the shutter plate 11 in the upper side of the already mentioned opening portion 17, an upward side inclined surface 30d which gets depressed like a gentle slope from the front surface of the shutter plate 11 so as to face to the downward side inclined surface 30c, and a rectangular bottom surface 30e which is surrounded by both the right and left wall surfaces 30a and 30a, the downward side inclined surface 30c and the upward side inclined surface 30d, as shown in Figs. 9, 10, 13 and 14.

At this time, the upward side inclined surface 30d of the runout portion 30 is formed a runout slope in relation to the leading end portion of the ferrule 24 when the LC type optical connector plug P1 is inserted from a diagonally upward direction from the near side of the fitting portion A of the connector housing 1, and the downward side inclined surface 30c of the runout portion 30 is formed a runout slope in relation to the leading end portion of the ferrule 24 when the LC type optical connector plug P1 is inserted along the horizontal direction from the near side of the fitting portion A of the connector housing 1.

Further, the runout portion 30 of the shutter plate 11 is structured such that the shutter plate 11 is pushed away and opened by a leading end opening edge portion of a cylindrical coupling sleeve 21 which is provided so as to cover a periphery of the ferrule 24 of the LC type optical connector plug P1 as well as receiving the leading end portion of the ferrule 24 in a non-contact state. At this time, an inward C-shaped concave groove portion 7b having a guide protrusion 7a in its lower side for inserting and guiding the LC type optical connector plug P1 is formed in the horizontal direction in the connector housing 1 in addition to the key groove 12 for guiding when the LC type optical connector plug P1 is inserted. As a result, the LC type optical connector plug P1 itself maintains the horizontal state naturally according to an inserting process.

Further, an opening portion 11d approximately having a trapezoidal cross sectional shape is formed in a rectangular concave portion 11a which is formed in an inner surface of the bottom wall 1c with having the magnitude and the thickness corresponding to a whole surface of the shutter plate 11, the opening portion 11d being provided for receiving a rear wall surface of the runout portion 30 protruding out of the rear surface of the shutter plate 11. The opening portion 11d is closed by a bottom plate 8c of the holder 51 for the optical adapter which is mentioned later and is installed to the lower surface of the bottom wall 1c of the connector housing 1. Further, the leaf spring 18 is curved approximately into a circular arc shape toward an inner side so that the other end supported to the rear surface of the shutter plate 11 avoids a rear wall surface of the runout portion 30, and is bent approximately into an L-shaped form so that one end supported to the concave portion 11c in the inner surface of the bottom wall 1c is engaged within the opening portion 11d which is formed in the concave portion 11a (refer to Fig. 14).

### <Structure of holder for optical adapter>

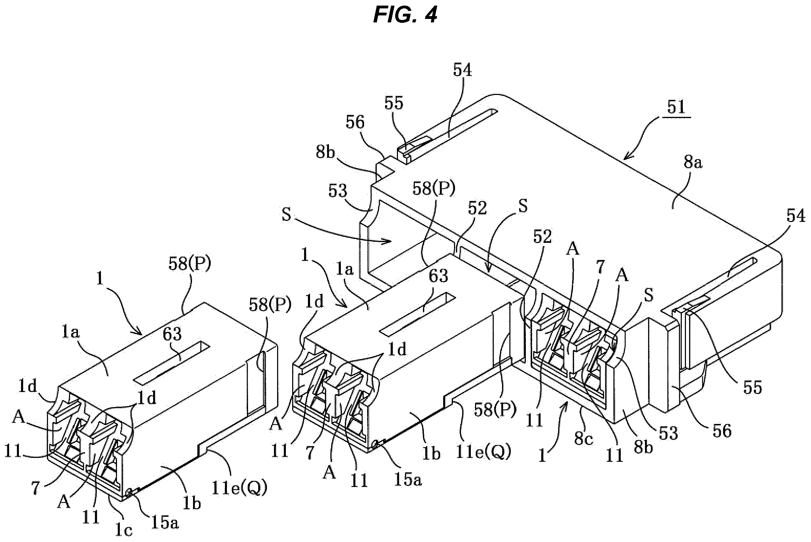

As shown in Figs. 4 to 9, the holder 51 for the optical adapter has a plurality of rectangular opening-shaped receiving portions S which can receive a plurality of connector housings 1 for the two-core adapter for interconnecting a pair of facing LC type optical connector plugs P1 and P2. More specifically, in the present drawing, in the holder 51 for the optical adapter, three receiving portions S are adjacently arranged via two reinforcing intermediate partition portions 52 for partitioning an approximately rectangular tubular casing constructed by a top plate 8a, right and left side plates 8b and a bottom plate 8c into three sections transversely.

Further, as shown in Fig. 8, the projection portions 57 are formed in rear sides of the right and left inner wall surfaces of the receiving portions S of the holder 51 for the optical adapter, and the vertical groove-shaped concave portions 58 are formed in rear sides of the outer surfaces of the right and left side walls 1b of the connector housing 1 of the two-core adapter as has been mentioned already, in correspondence to the projection portions 57. The pulling direction come-off prevention portion P is constructed by the projection portion 57 and the concave portion 58. More specifically, the pulling direction come-off prevention portion P is structured such that the connector housing 1 does not easily get out of the holder 51 for the optical adapter even if a downward pulling stress is applied to the plug in a state in which the optical connector plug P1 is inserted into the two-core adapter, by fitting the projection portion 57 of the holder 15 to the concave portion 58.

Further, as shown in Figs. 8, 9, 10, 13 and 14 as has been already mentioned already, the locking step portion 59 is formed in the inner wall surface of the bottom portion of the holder 51 for the optical adapter, the locking step portion 59 being formed into the downward step shape toward the forward side. In correspond to the locking step portion 59, the locked step portion 11e is formed in the outer wall surface of the bottom portion of the connector housing 1 of the two-core adapter, the locked step portion 11e being formed into the upward step shape toward the rear side of the connector housing 1. The pushing direction come-off prevention portion Q is constructed by the locked step portion 11e and the locking step portion 59. More specifically, the pushing direction come-off prevention portion Q is structured such that the connector housing 1 can not be easily pushed rearward out of the holder 51 for the optical adapter in a state in which the optical connector plug P1 is inserted into the two-core adapter, by engaging the locking step portion 59 with the locked step portion 11e.

Further, as shown in Figs. 4 to 9, a vertically long rectangular flange portion 56 and a locking protrusion piece 55 are formed in right and left outer wall surfaces of the holder 51 for the optical adapter, the locking protrusion piece 55 being protruded forward in a state in which an elasticity is applied in a rear side of the flange portion 56 via a cut portion 54. When the holder 51 for the optical adapter is attached to an attachment hole portion of an attachment plate (not shown), the holder 51 for the optical adapter is inhibited from coming off from the attachment hole portion on the basis of an elastic force of the locking protrusion piece 55, while an opening edge portion of the attachment hole portion is pinched between the flange portion 56 and the locking protrusion piece 55. Reference numeral 53 in the drawings denotes a notch portion of the holder 51 for the optical adapter, the notch portion being formed into such a shape as to correspond to the notch portion 1d of the connector housing 1.

### <Modified example>

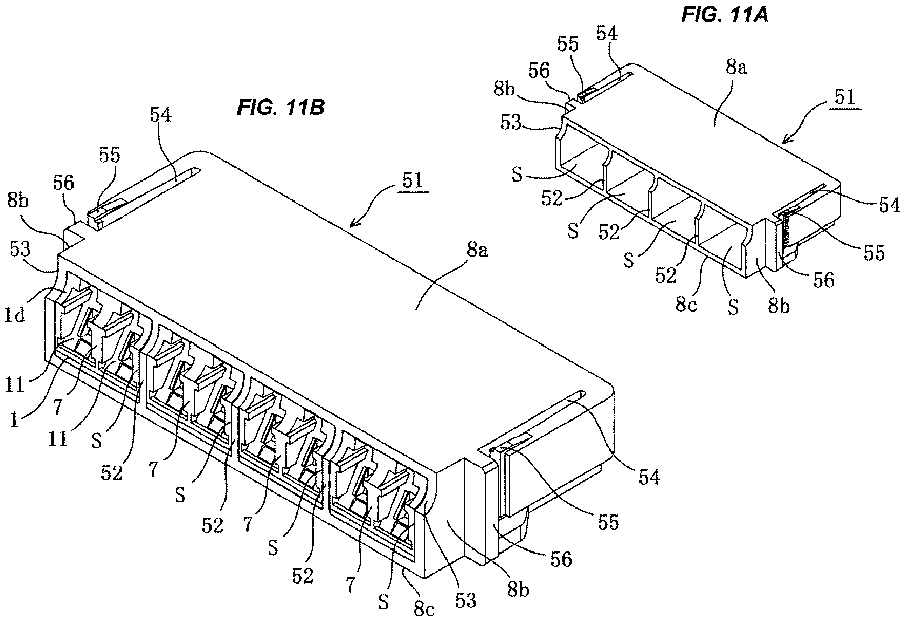

Figs. 11A and 1B show a modified example of the holder 51 for the optical adapter. In this case, the holder 51 has four receiving portions S which can receive four connector housings 1 of the two-core adapter and are formed into a rectangular opening shape. More specifically, in the holder 51 for the optical adapter, four receiving portions S are adjacently arranged view three reinforcing intermediate partition portions 52 for partitioning the rectangular tubular casing into four sections transversely. Even in the modified example mentioned above, the same operations and effects as those of the present embodiment mentioned above can be achieved.

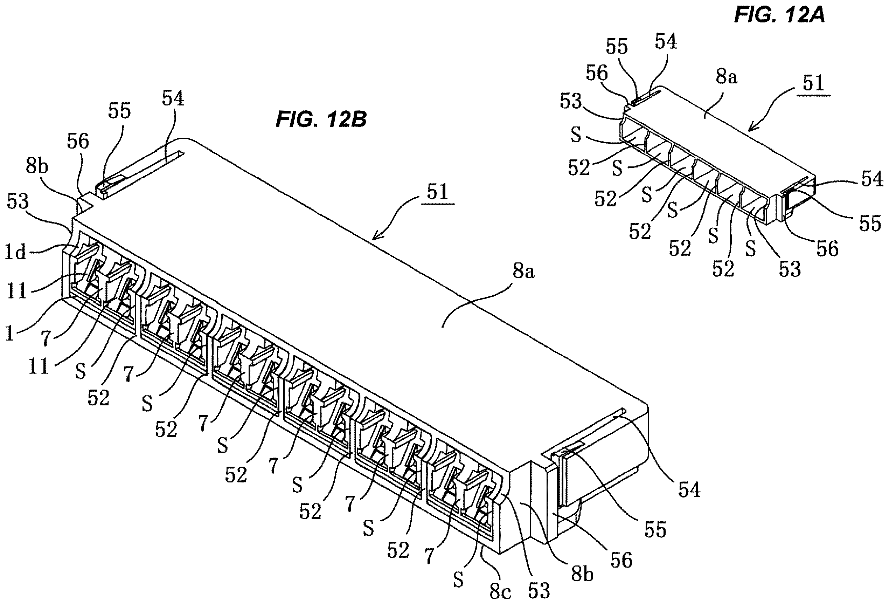

Further, Figs. 12A and 12B show the other modified example of the holder 51 for the optical adapter. In this case, the holder 51 has six receiving portions S which can receive six connector housings 1 of the two-core adapter and are formed into a rectangular opening shape. More specifically, in the holder 51 for the optical adapter, six receiving portions S are adjacently arranged view five reinforcing intermediate partition portions 52 for partitioning the rectangular tubular casing into six sections transversely. Even in the modified example mentioned above, the same operations and effects as those of the present embodiment mentioned above can be achieved. In addition, the holder 51 for the optical adapter may be formed so as to have twelve cores or more receiving portions S.

Accordingly, the LC type optical connector plug P1 (P2) is provided, as shown in Figs. 13 and 14, with a coupling sleeve 21 which is made of a plastic having a comparatively higher strength, a ferrule 24 which is installed to a ferrule tube and a ferrule frame within the coupling sleeve 21, a spring which is installed to an outer periphery of a rear end portion of the ferrule frame, and a main body frame 26 which is fitted to the rear end portion of the ferrule frame via the spring and is made of a plastic.

Further, a pair of right and left engagement projections 28a are provided on an outer peripheral surface of the coupling sleeve 21, the engagement projections 28a being inserted into an inward C-shaped concave groove portion 7b arranged in an upper side within the fitting portions A and B provided in both ends of the connector housing 1 while being engaged with the concave groove portion 7b. Further, a release lever 28 for engaging with the key groove 12 provided at the center within the upper wall portion 1a of the connector housing 1 and releasing the engagement is integrally provided in the coupling sleeve 21. The release lever 28 is inclined and extended so as to move away from the outer surface of the coupling sleeve 21 little by little from the leading end portion of the coupling sleeve 21 toward the rear end portion, and the rear end portion protrudes like a slope in an opposite side to the coupling sleeve 21 so as to come into contact with a latch lever 29 which is formed on an outer peripheral surface of the main body frame 26.

Since the ferrule 24 of the LC type optical connector plug P1 installed from one opening side (for example, the fitting portion A) of the connector housing 1 is fitted to one side of the sleeve holder 5, and the ferrule 24 of the LC type optical connector plug P2 optically connected thereto is fitted to the other side of the sleeve holder 5, both the ferrule 24 are aligned in an axial direction in a state in which both the ferrules 24 are brought into contact with each other in their leading ends via the split sleeve 6 which is inward installed over both the cylinders 5a and 5b (refer to Fig. 14).

Next, a description will be given of an example of an assembly and a use of the best mode which is constructed as mentioned above.

When the adapter for the LC type optical connector is assembled, the joint end wall members 3a and 3b are engaged with and fixed to each other by aligning the center axes of both the cylinders 5a and 5b on the optical axes in a state in which the split sleeve 6 is installed between both the cylinders 5a and 5b forming the sleeve holder 5, as shown in Figs. 1 and 3. Further, the sleeve holder 5 is assembled in the fitting concave portion 6a of the partition projection 6b at the center of the upper side wall 1 a of the connector housing 1.

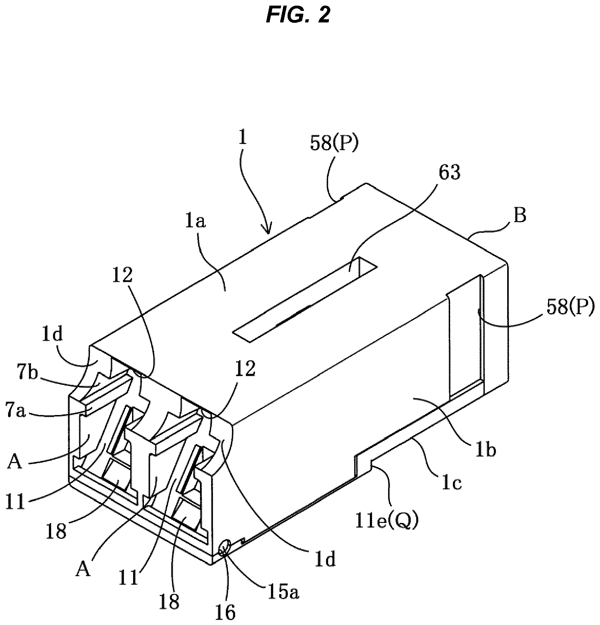

At the same time, the protruding portions 15a in both ends of the support shaft 15 of the shutter plate 11 are mounted to the shaft hole 16 of the bottom wall 1c and a pair of side walls 1b arranged in right and left sides of the upper side wall 1a approximately having the C-shaped form in its front view are respectively assembled on the bottom wall 1c, after the leaf spring 18 is outward fitted to the center of the support shaft 15 via the opening portion 17 of the shutter plate 11. As a result, the two-core adapter is finished (refer to Fig. 2).

For example, the six-core adapter is formed by fitting and arranging the two-core adapters (the connector housings 1) into three receiving portions S of the rectangular tube-like holder 51 for the optical adapter. At this time, as shown in Fig. 8, the projection portion 57 of the holder 15 is fitted to the concave portion 58 of the connector housing 1 in the pulling direction come-off prevention portion P, and the locked step portion 11 e of the connector housing 1 is engaged with the locking step portion 59 of the holder 51 for the optical adapter in the pushing direction come-off prevention portion Q.

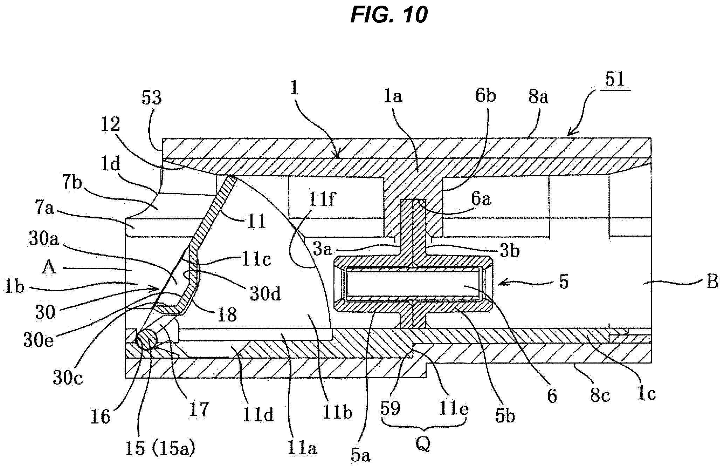

Further, as shown in Figs. 9 and 10, one end of the leaf spring 18 is brought into pressure contact with the bottom plate 8c of the holder 51 for the optical adapter closing the opening portion 11d, via the opening portion 11d which is formed in the concave portion 11a of the bottom wall 1c, and the other end is brought into pressure contact with the rear wall surface of the runout portion 30 of the shutter plate 11. As a result, the shutter plate 11 is energized in an approximately inclined state in a direction of closing the fitting end in one fitting portion A. When the shutter plate 11 is opened, one end of the leaf spring 18 is pinched by the rear wall surface of the runout portion 30 and the bottom plate 8c of the holder 51 for the optical adapter in the opening portion 11d.

More specifically, before the LC type optical connector plug P1 is fitted to one fitting portion A of the connector housing 1 when the adapter for the LC type optical connector is used, the shutter plate 11 first of all closes the fitting end in one fitting portion A on the basis of a snapping force in an expanding direction of the approximately L-shaped leaf spring 18. At this time, a side surface of a movable portion of the shutter plate 11 strikes against the step-like abutting surface 11c and is locked after the rotation toward the upward direction along the arcuate guide portions 11f which are formed in the outer ends of the recess portions 11b of the right and left side walls 1b of the connector housing 1.

As shown in Fig. 13, when the LC type optical connector plug P1 is pressed into the fitting portion A of the connector housing 1, the LC type optical connector plug P1 itself is inserted naturally in a horizontal state together with an inserting process, on the basis of existence of the inward C-shaped concave groove portion 7b having the guide protrusion 7a in its lower side in addition to the key groove 12 of the fitting portion A of the connector housing 1. Further, when the LC type optical connector plug P1 is completely pressed into the fitting portion A and the ferrule 24 is fitted to one side of the sleeve holder 5, a connecting work is finished in a state in which the LC type optical connector plug P1 is firmly pinched between the shutter plate 11 and the upper side wall 1a of the connector housing, on the basis of the snapping force of the leaf spring 18. At this time, one end of the leaf spring 18 comes to a state in which the one end is pinched by the rear wall surface of the runout portion 30 and the bottom plate 8c of the holder 51 for the optical adapter in the opening portion 11d.

As described above, since the present embodiment has the pulling direction come-off prevention portion P constructed by the projection portions 57 which are formed in the right and left inner wall surfaces of the holder 51 for the optical adapter, and the concave portions 58 which are formed in the right and left outer wall surfaces of the connector housing 1 of the two-core adapter for fitting and locking the projection portions 57, it is possible to securely make the two-core adapter be retained to the holder 51 for the optical adapter so as to prevent the two-core adapter from coming off from the holder 51 for the optical adapter even if the downward pulling stress is applied to the plug in the state in which the optical connector plug P1 is inserted into the two-core adapter.

Further, since the pushing direction come-off prevention portion Q is provided by the forward direction downward step-like locking step portion 59 which is formed in the inner wall surface of the bottom portion of the holder 51 for the optical adapter, and the rearward direction upward step-like locked step portion 11e which is formed in the outer wall surface of the bottom portion of the connector housing 1 of the two-core adapter for being locked to the locking step portion 59, it is possible to securely make the two-core adapter be retained to the holder 51 for the optical adapter so as to prevent the two-core adapter from coming off from the holder 51 for the optical adapter even if the stress in the pushing direction of the two-core adapter is applied to the holder 51 for the optical adapter in the state in which the optical connector plug P1 is inserted into the two-core adapter.

The invention provides a holder device for an optical adapter in which a multi-core adapter can be retained to a holder so as to prevent the multi-core adapter from coming off from the holder for the optical adapter even in the case that a stress pulling an optical connector plug in a downward direction or a stress in a direction of pushing the adapter to the holder for the optical adapter acts on the plug in a state in which the optical connector plug is inserted into the multi-core adapter. In a holder (51) for an optical adapter to which a multi-core adapter (1) for interconnecting a pair of facing LC type optical connector plugs (P1, P2), the holder (51) for the optical adapter is provided with a plurality of receiving portions (S) which are arranged within an approximately rectangular tubular casing so as to be adjacent via a reinforcing intermediate partition portion (52), and is formed by fitting and arranging the multi-core adapters (1) in the receiving portions (S).

### DESCRIPTION OF REFERENCE NUMEARLS

- P: pulling direction come-off prevention portion
- Q: pushing direction come-off prevention portion
- S: receiving portion
- P1, P2: LC type optical connector plug
- A: one fitting portion
- B: other fitting portion
- 1: connector housing
- 1a: upper side wall
- 1b: right and left side walls
- 1c: bottom wall
- 1d: notch portion
- 3a, 3b: joint end wall member
- 4a: engagement hook
- 4b: engagement portion
- 5: sleeve holder
- 5a: one cylinder
- 5b: other cylinder
- 6: split sleeve
- 6a: fitting concave portion
- 6b: partition projection
- 7a: guide protrusion
- 7b: concave groove portion
- 8a: top plate
- 8b: right and left side plates
- 8c: bottom plate
- 9a, 9b: fixing metal fitting
- 10a: locking projection
- 10b: locking hole
- 11: shutter plate
- 11a: concave portion
- 11b: recess portion
- 11c: abutting surface
- 11d: opening portion
- 11e: locked step portion
- 11f: guide portion
- 12: key groove
- 15: support shaft
- 15a: protruding portion
- 16: shaft hole
- 17: opening portion
- 18: leaf spring
- 21: coupling sleeve
- 24: ferrule
- 26: main body frame
- 28: release lever
- 28a: engagement projection
- 29: latch lever
- 30: runout portion
- 30a: right and left wall surfaces
- 30b: downward side inclined surface
- 30d: upward side inclined surface
- 30e: bottom surface
- 51: holder for optical adapter
- 52: reinforcing intermediate partition portion
- 53: notch portion
- 54: cut portion
- 55: locking protrusion piece
- 56: flange portion
- 57: projection portion
- 58: concave portion
- 59: locking step portion
- 61: positioning projection
- 62: positioning hole
- 63: thinning depression

## Claims

1. A holder device, comprising:
a plurality of multi-core optical adapters (1) each multi-core optical adapter being configured for interconnecting pairs of facing LC type optical connector plugs (P1, P2), and
a holder (51) for said plurality of multi-core optical adapters, said holder having a plurality of receiving portions (S) which are each arranged within a rectangular tubular casing so as to be adjacent via a reinforcing intermediate partition portion (52),
wherein the holder device is formed by fitting and arranging said plurality of multi-core optical adapters (1) in the respective plurality of receiving portions (S) of said holder (51), **characterized by**
further comprising a pulling direction come-off prevention portion (P) constructed by projection portions (57) which are formed in right and left inner wall surfaces (8b) and said reinforcing intermediate partition portion (52) of said holder (51), and concave portions (58) which are formed in right and left outer wall surfaces (1b) of said plurality of multi-core optical adapters (1) for fitting and locking said projection portions (57).

2. The holder device according to claim 1, further comprising a pushing direction come-off prevention portion (Q) constructed by a locking step portion (59) which is formed in an inner wall surface of a bottom portion (8c) of said holder (51) and is formed into a downward step shape in a forward direction, and a locked step portion (11e) which is formed in an outer wall surface of the bottom portion (1c) of said plurality of multi-core optical adapters (1) for being locked to said locking step portion (59) and is formed into an upward step shape in a rearward direction.

## Patentansprüche

1. Halterungsvorrichtung, mit:
einer Vielzahl von mehrkernigen optischen Adaptern (1), wobei ein jeder mehrkerniger optischer Adapter zum Zusammenschalten von Paaren zugewandter optischer Verbindungsstecker (P1, P2) einer LC-Bauart konfiguriert ist, und
einer Halterung (51) für die Vielzahl der mehrkernigen optischen Adapter, wobei die Halterung eine Vielzahl von Aufnahmeabschnitten (S) hat, welche jeweils innerhalb eines rechteckigen rohrförmigen Gehäuses angeordnet sind, um über einen Verstärkungs-Zwischenteilungsabschnitt (52) benachbart zu sein, wobei
die Halterungsvorrichtung ausgebildet ist, indem die Vielzahl der mehrkernigen optischen Adapter (1) in die entsprechende Vielzahl der Aufnahmeabschnitte (S) der Halterung (51) eingesetzt und angeordnet sind, **dadurch gekennzeichnet, dass**
sie ferner einen Zugrichtungs-Ablöse-Verhinderungsabschnitt (P), der durch Vorsprungsabschnitte (57) eingerichtet ist, welche in einer rechten und einer linken Innenwandfläche (8b) und dem Verstärkungs-Zwischenteilungsabschnitt (52) der Halterung (51) ausgebildet sind, und konkave Abschnitte (58) aufweist, welche in rechten und linken Außenwandflächen (1b) der Vielzahl der mehrkernigen optischen Adapter (1) zum Einsetzen und Verriegeln der Vorsprungsabschnitte (57) ausgebildet sind.

2. Halterungsvorrichtung nach Anspruch 1, ferner mit einem Einschubrichtung-Ablöse-Verhinderungsabschnitt (Q), der durch einen Verriegelungsstufenabschnitt (59), welcher in einer Innenwandfläche eines Bodenabschnitts (8c) der Halterung (51) ausgebildet ist und in einer Vorwärtsrichtung in einer Abwärtsstufenform ausgebildet ist, und einen verriegelten Stufenabschnitt (11e) eingerichtet ist, welcher in einer Außenwandfläche des Bodenabschnitts (1c) der Vielzahl der mehrkernigen optischen Adapter (1) ausgebildet ist, um an dem Verriegelungsstufenabschnitt (59) verriegelt zu sein, und in einer Rückwärtsrichtung in einer Aufwärtsstufenform ausgebildet ist.

## Revendications

1. Dispositif de support, comprenant :
une pluralité d'adaptateurs optiques multicœur (1), chaque adaptateur optique multicœur étant configuré pour interconnecter des paires de fiches de connecteur optique (P1, P2) de type LC se faisant face, et
un support (51) pour ladite pluralité d'adaptateurs optiques multicœur, ledit support ayant une pluralité de parties de réception (S) qui sont agencées chacune à l'intérieur d'un boîtier tubulaire rectangulaire de manière à être adjacentes via une partie de séparation intermédiaire de renforcement (52),
dans lequel le dispositif de support est formé en ajustant et en agençant ladite pluralité d'adaptateurs optiques multicœur (1) dans la pluralité de parties de réception (S) respective dudit support (51), **caractérisé en ce que**
il comprend en outre une partie empêchant le détachement dans une direction de traction (P) construite par des parties en saillie (57) qui sont formées dans des surfaces de paroi intérieure droite et gauche (8b) et ladite partie de séparation intermédiaire de renforcement (52) dudit support (51), et des parties concaves (58) qui sont formées dans des surfaces de paroi extérieure droite et gauche (1b) de ladite pluralité d'adaptateurs optiques multicœur (1) pour ajuster et verrouiller lesdites parties en saillie (57).

2. Dispositif de support selon la revendication 1, comprenant en outre une partie empêchant le détachement dans une direction de poussée (Q) construite par une partie de verrouillage étagée (59) qui est formée dans une surface de paroi intérieure d'une partie de fond (8c) dudit support (51) et qui est formée en une forme étagée vers le bas dans une direction vers l'avant, et une partie étagée verrouillée (11e) qui est formée dans une surface de paroi extérieure de la partie de fond (1c) de ladite pluralité d'adaptateurs optiques multicœur (1) pour être verrouillée à ladite partie de verrouillage étagée (59) et qui est formée en une forme étagée vers le haut dans une direction vers l'arrière.
